# EUROPEAN PATENT APPLICATION

(11) **EP 2 431 909 A1**
(43) Date of publication of application: **21.03.2012**
(21) Application number: 09848419.9
(22) Date of filing: 28.12.2009
(51) Int. Cl.: G06K 7/00

(54) **METHOD AND SYSTEM FOR COUNTING TAGS IN RADIO FREQUENCY IDENTIFICATION SYSTEM**

(30) Priority: 21.08.2009 CN 200910168832
(71) Applicant: ZTE Corporation, Shenzhen, Guangdong 518057 (CN)
(72) Inventor: DU, Jiang, Shenzhen Guangdong 518057 (CN); WANG, Li, Shenzhen Guangdong 518057 (CN); ZHANG, Jian, Shenzhen Guangdong 518057 (CN)
(74) Representative: Davies, Gregory Mark
(86) International application number: PCT/CN2009/076147
(87) International publication number: WO 2011/020278

(57) **Abstract**

The present invention discloses a method and system for tallying tags in a radio frequency identification system. The method comprises: upon receiving a tallying command sent by the reader, the tags reflecting a first response message used for decoding and checking (S402); upon receiving the first response message, the reader sending a decoded random number (RN) if it decodes the first response message correctly; upon receiving the decoded RN, the tags reflecting a second response message containing tag ID information after confirming that the RN is consistent with their own RN (S405); and upon receiving the second response message, the reader confirming that the tallying is completed if the tag ID information contained in the second response message is correct (S407).

## Description

### Technical Field

The present invention relates to the field of wireless communication, and more particularly, to a method and system for tallying tags in the field of radio frequency identification (RFID).

### Background of the Related Art

A Radio Frequency Identification (RFID) system, which consists of tags and a reader, is a non-contact automatic identification technology that automatically identifies a target object via a radio frequency signal and acquires relevant data. The identification does not need manual intervention and can be performed in a variety of harsh environments. The RFID technology can identify high speed moving objects and can also identify multiple tags at the same time, and is rapid and convenient to implement. Its working principle will be described below.

The reader sends information to one or more tags by modulating radio frequency (RF) carrier signals. The tags acquire energy from a working power supply through a RF electromagnetic field of the reader. Information of the tags is encoded in a certain encoding mode. The tags transmit information by magnitudes or phases of backscattered modulated RF carrier signals. The reader acquires the information of tags by sending an un-modulated RF carrier and intercepting a backscattered reply of the tags. The reader decodes the information of the tags. The communication between the reader and tags is half-duplex.

Passive tags mainly consist of an antenna system, a radio frequency unit, a logic unit, and a memory. One part of energy obtained from the reader is consumed by internal circuits, while the other part is emitted by the antenna. Response signals of the tags are sent wirelessly to the reader by modulating baseband signals to high-frequency carriers sent from the reader. When the entire RFID system is initiated, the reader first tallies all the tags in a wireless field to obtain identification information of all the tags in the wireless field, and then reads and writes the tags according to system application requirements. The tallying process is the most basic and mostly used in the RFID system application.

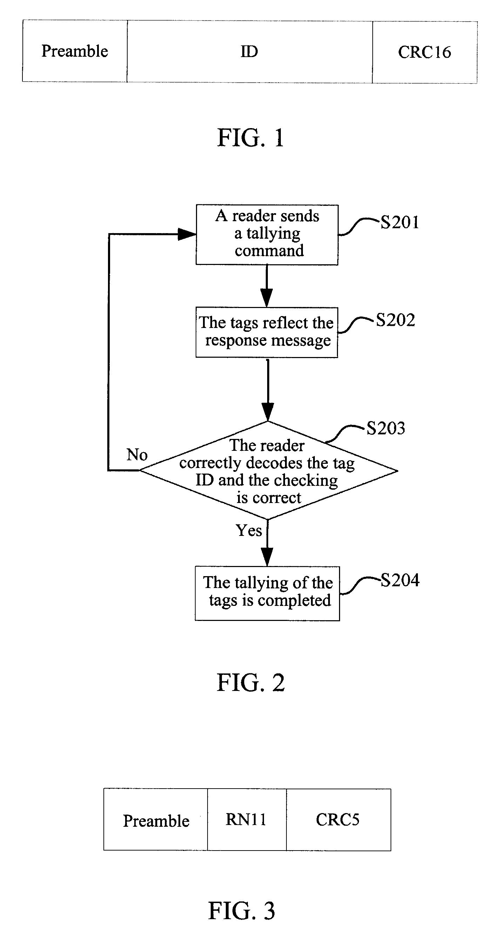

FIG. 1 illustrates a structure of a tag response message in the ISO18000-6B, where the structure of the tag response message comprises a preamble, tag ID information and a Cyclic Redundancy Check (CRC) code. The preamble is mainly used by the reader to achieve frame synchronization function, the tag ID information is used to distinguish different tags such that the reader can identify the tags, and the CRC code is used to verify the integrity of the response message.

FIG. 2 is a flow chart of a method for tallying tags in the ISO18000-6B and mainly describes a process of tag response in the ISO18000-6B. During the tallying, the tags are tallied according to the following process.

S201: a reader sends a tallying command;
S202: the tags reflect the tag response message containing the preamble, the ID information and the CRC code;
S203: the reader determines whether the tag ID can be correctly decoded or not; if the tag ID can be correctly decoded after the preamble, and the checking is correct, the process proceeds to step S204; if an error occurs, it is believed that a collision or a transmission error occurs, the process returns to step S201, and continues the following tallying process; and
S204: the tallying is completed, and the tags exit the tallying process.

After the tags exit the tallying process, if the entire tallying process of the reader has not been completed yet, it proceeds to the next tallying step.

In the aforementioned tallying process, the tag ID is typically 64bit, which is larger in relation to the amount of transmission data. In addition, both the correct tallying and collision are required to be determined after 64 bits are transmitted such that the entire time slot is relatively long and the tallying speed is relatively slow.

From the viewpoint of the existing standard, the tallying rate is not high in the existing tallying process, mainly because the length of message of the tallying command responded by the tag is relatively long, thus wasting much time; or, the number of error codes in the tallying command is relatively large and the success rate is relatively low.

### Content of the Invention

In order to solve the technical problem described above, the present invention provides a method and system for tallying tags in a radio frequency identification system.

In order to solve the technical problem, the technical scheme of the present invention is implemented as described hereinafter.

The present invention provides a method for tallying tags in a radio frequency identification system, which is used in the radio frequency identification system comprising a reader and tags. The method comprises:
upon receiving a tallying command sent by the reader, the tags reflecting a first response message used for decoding and checking;
upon receiving the first response message, the reader sending a decoded random number (RN) if it decodes the first response message correctly;
upon receiving the decoded RN, the tags reflecting a second response message containing tag ID information after confirming that the RN is consistent with their own RN; and
upon receiving the second response message, the reader confirming that the tallying is completed if the tag ID information contained in the second response message is correct.

The first response message contains the RN and a CRC code, and the reader decoding the first response message correctly comprises:
the reader decoding the RN correctly and determining that the checking is correct based on the CRC code.

The method further comprises: upon receiving the first response message, the reader being unable to correctly decode the RN and/or determining that the checking is incorrect based on the CRC code, and then resending the tallying command.

The method further comprises: upon receiving the second response message, if the reader does not acquire the tag ID information and/or the tag ID information is incorrect, the reader resending the decoded RN.

The first response message further contains the preamble.

The decoded RN is carried in an ACK command.

In the first response message, the RN is 11bit, and the CRC code is 5bit.

The present invention provides a system for tallying tags in a radio frequency identification system comprising a reader and tags, wherein
the reader is configured to send a decoded random number (RN) if it decodes the first response message correctly; and upon receiving the second response message from the tags, confirm that the tallying is completed if the tag ID information contained in the second response message is correct;
the tags are configured to reflect a first response message used for decoding and checking upon receiving a tallying command sent by the reader; and upon receiving the decoded RN, reflect a second response message containing tag ID information after confirming that the RN is consistent with their own RN.

The first response message contains the RN and the CRC code, and the reader is further configured to:
receive the first response message, and resend the tallying command if the RN is unable to be correctly decoded and/or the checking is determined to be incorrect based on the CRC code.

The reader is further configured to:
upon receiving the second response message, resend the decoded RN if the tag ID information is not acquired and/or the tag ID information is incorrect.

In the first response message, the RN is 11bit, and the CRC code is 5bit; or, the RN is 16bit and the CRC code is 16bit.

Using the technical scheme of the present invention, data amount transmitted in the tallying process is relatively small, and at the same transmission rate, transmission time is short; moreover, in the transmission process, transmission errors can be found out quickly, thus improving tag response efficiency in the tallying process and reduce time and energy consumed in the tallying process.

### Brief Description of Drawings

FIG. 1 is a structural diagram of a tag response message in the ISO18000-6B;
FIG. 2 is a flow chart of a method for tallying tags in the ISO18000-6B;
FIG. 3 is a structural diagram of the first response message in a method for tallying tags in accordance with the present invention; and
FIG. 4 is a flow chart of a method for tallying tags in accordance with the present invention.

### Preferred Embodiments of the Present Invention

The embodiments of the present invention will be described in detail below in conjunction with the accompanying figures.

FIG. 3 is a structural diagram of the first response message in a tallying method in accordance with the present invention. The structure of the first response message of tags comprises a preamble, a random number (RN) and a CRC code. The preamble is mainly used by a reader to achieve frame synchronization function. The RN, which is generated by a RN generator of the tags, is used to distinguish different tags such that the reader can identify the tags. The CRC code is used to verify the integrity of the response message. The numbers of bits of the RN and the CRC code can be selected randomly. In practical applications, however, the sum of the numbers is an integer byte, that is, a multiple of 8. 16bit random number and 16bit CRC code or 11 bit random number and 5bit CRC code are generally used. 11bit random number and 5bit CRC are used in this embodiment.

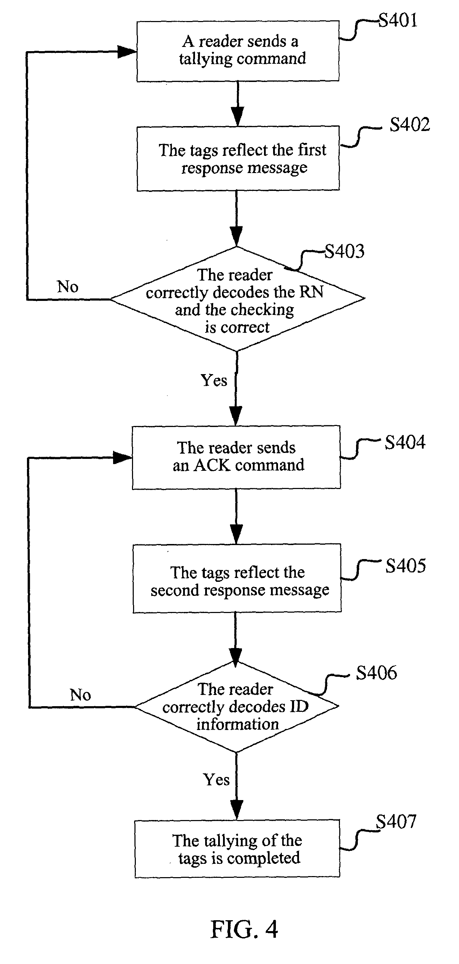

FIG. 4 is a flow chart of a method for tallying tags method in accordance with the present invention, its process will be described below.

S401: a reader sends a tallying command.

S402: the tags reflect the first response message containing a preamble, 11bit random number RN11 and CRC5.

S403: the reader determines whether the first response message can be correctly decoded to acquire the RN11 or not; if 16bit data can be correctly decoded after the preamble, and the 16bit data is determined to be correct according to the CRC5 checking, it is believed that that the correct RN11 and CRC5 are acquired, the process proceeds to S404; if the 16bit data cannot be decoded correctly or the checking is wrong, it is believed that a collision occurs, the process returns to S401, and continues the following tallying process.

S404: the reader sends an ACK command containing the decoded random number RN11 of the tags to confirm tag ID information.

S405: after the tags receive the ACK command, they confirm that the decoded random number RN11 contained in the ACK is consistent with their own RN11, and reflect the second response message containing the tag ID information to the reader.

S406: after the reader receives the second response message of the tags, if the tag ID information can be determined to be correct, it means that information if the tags is correct, the process proceeds to S407; if the ID information responded by the tags is not received or the checking of the ID information is not incorrect, it means that there is an error when the tags respond the ID information, the process returns to step 4 and the ACK command is resent.

S407: the tallying process is completed, and the tags exit the tallying process.

After the tags exit the tallying process, if the entire tallying process of the reader has not been completed yet, it proceeds to the next step in the tallying process.

The present invention provides a type of tags used to construct the first response message containing a preamble, a random number (RN) and a CRC code; the preamble is used by the reader to achieve frame synchronization; the RN is used to identify the tags; and the CRC is used to verify the integrity of the first response message.

In the first response message, the RN is 11bit, and the CRC code is 5bit.

In the first response message, the RN is 16bit, and the CRC code is 16bit.

To sum up, it can be seen that the method for tallying tags in accordance with the present invention can be used in the RFID system comprising a reader and tags. The method comprises: upon receiving a tallying command sent by the reader, the tags reflecting a first response message used for decoding and checking; upon receiving the first response message, the reader sending a decoded random number (RN) if it decodes the first response message correctly; upon receiving the decoded RN, the tags reflecting a second response message containing tag ID information after confirming that the RN is consistent with their own RN; and upon receiving the second response message, the reader confirming that the tallying is completed if the tag ID information contained in the second response message is correct.

The tallying system in accordance with the present invention comprises a reader and tags. The reader is configured to send a decoded random number (RN) if it decodes the first response message correctly; and upon receiving the second response message from the tags, confirm that the tallying is completed if the tag ID information contained in the second response message is correct; and the tags are configured to reflect a first response message used for decoding and checking upon receiving a tallying command sent by the reader; and upon receiving the decoded RN, reflect a second response message containing tag ID information after confirming that the RN is consistent with their own RN.

Using the technical scheme of the present invention, whether the method or the system, data amount transmitted in the tallying process is relatively small, and at the same transmission rate, transmission time is short; moreover, in the transmission process, transmission errors can be found out quickly, thus improving tag response efficiency in the tallying process and reduce time and energy consumed in the tallying process..

The above description is the preferred embodiments of the present invention only, and is not intended to limit the present invention. Various modifications and variations to the present invention may be made by those skilled in the art . Any modification, equivalent substitution and improvement made within the spirit and principle of the present invention should be covered in the protection scope of the present invention.

## Claims

1. A method for tallying tags in a radio frequency identification system, which is used in the radio frequency identification system comprising a reader and tags, the method comprises:
upon receiving a tallying command sent by the reader, the tags reflecting a first response message used for decoding and checking;
upon receiving the first response message, the reader sending a decoded random number (RN) if it decodes the first response message correctly;
upon receiving the decoded RN, the tags reflecting a second response message containing tag ID information after confirming that the RN is consistent with their own RN; and
upon receiving the second response message, the reader confirming that the tallying is completed if the tag ID information contained in the second response message is correct.

2. The method according to claim 1, wherein the first response message contains the RN and a CRC code, and the reader decoding the first response message correctly comprises:
the reader decoding the RN correctly and determining that the checking is correct based on the CRC code.

3. The method according to claim 2, further comprising: upon receiving the first response message, the reader being unable to correctly decode the RN and/or determining that the checking is incorrect based on the CRC code, and then resending the tallying command.

4. The method according to claim 1 or 2, further comprising: upon receiving the second response message, if the reader does not acquire the tag ID information and/or the tag ID information is incorrect, the reader resending the decoded RN.

5. The method according to claim 1 or 2, wherein the first response message further contains the preamble.

6. The method according to claim 1, wherein the decoded RN is carried in an ACK command.

7. The method according to claim 2, wherein in the first response message, the RN is 11 bit, and the CRC code is 5bit.

8. A system for tallying tags in a radio frequency identification system comprising a reader and tags, wherein
the reader is configured to send a decoded random number (RN) if it decodes the first response message correctly; and upon receiving the second response message from the tags, confirm that the tallying is completed if the tag ID information contained in the second response message is correct; and
the tags are configured to reflect a first response message used for decoding and checking upon receiving a tallying command sent by the reader; and upon receiving the decoded RN, reflect a second response message containing tag ID information after confirming that the RN is consistent with their own RN.

9. The system according to claim 8, wherein the first response message contains the RN and the CRC code, and the reader is further configured to:
receive the first response message, and resend the tallying command if the RN is unable to be correctly decoded and/or the checking is determined to be incorrect based on the CRC code.

10. The system according to claim 8 or 9, wherein the reader is further configured to:
upon receiving the second response message, resend the decoded RN if the tag ID information is not acquired and/or the tag ID information is incorrect.

11. The system according to claim 8, wherein in the first response message, the RN is 11bit, and the CRC code is 5bit; or, the RN is 16bit and the CRC code is 16bit.
